# EUROPÄISCHE PATENTSCHRIFT

(11) **EP 3 414 982 B1**
(45) Veröffentlichungstag und Bekanntmachung des Hinweises auf die Patenterteilung: **29.07.2020**
(21) Anmeldenummer: 18177219.5
(22) Anmeldetag: 12.06.2018
(51) Int. Cl.: A01B 69/04, A01D 75/20

(54) **VERFAHREN UND VORRICHTUNG ZUM ERKENNEN VON TIEREN IN DER FAHRGASSE EINER LANDWIRTSCHAFTLICHEN FELDBEARBEITUNGSMASCHINE**
METHOD AND DEVICE FOR THE IDENTIFICATION OF ANIMALS IN THE MACHINE TRACK OF AN AGRICULTURAL FIELD CULTIVATING MACHINE
PROCÉDÉ ET DISPOSITIF DE DÉTECTION D'ANIMAUX DANS UNE VOIE DE ROULEMENT D'UNE MACHINE DE TRAITEMENT DU CHAMP AGRICOLE

(30) Priorität: 16.06.2017 DE 102017113245
(43) Veröffentlichungstag der Anmeldung: 19.12.2018
(73) Patentinhaber: PÖTTINGER Landtechnik GmbH, 4710 Grieskirchen (AT)
(72) Erfinder: Baldinger, Martin, 4722 Peuerbach (AT)
(74) Vertreter: Thoma, Michael

(56) Entgegenhaltungen:
- DE-A1-102009 036 809
- DE-A1-102010 038 661
- DE-A1-102014 201 203
- DE-B4-102005 055 919
- US-A1- 2016 157 414

## Beschreibung

Die vorliegende Erfindung betrifft allgemein die Erkennung von Tieren in der Fahrgasse von landwirtschaftlichen Feldbearbeitungsmaschinen, insbesondere für Grünlandmaschinen wie Mähmaschinen. Die Erfindung betrifft dabei insbesondere ein Verfahren und eine Vorrichtung zum Erkennen von Tieren mittels einer berührungslos arbeitenden Sensorik sowie zum Steuern der landwirtschaftlichen Feldbearbeitungsmaschine mit einer solchen Tiererkennungsvorrichtung.

Bei landwirtschaftlichen Feldbearbeitungsmaschinen, insbesondere Grünlandgeräten wie Mähmaschinen, Mähdreschern oder Heuwerbungsmaschinen ist es im Betrieb oft so, dass in der vom Maschinenführer zu kontrollierenden Fahrgasse dort befindliche Tiere schwer zu erkennen sind. Dies gilt insbesondere bei der Bearbeitung von Feldern mit noch stehendem Gut wie dies bei Mähmaschinen oder Mähdreschern der Fall ist, da im stehenden Gras oder stehenden Getreide Tiere mit dem menschlichen Auge kaum zu erkennen sind, zumal sich Tiere bei Annäherung einer Schlepper-Anbaugeräte-Kombination oft vor Schreck ducken und bewegungslos verharren, so dass sie im noch ungemähten Erntegut, beispielsweise höherem Gras kaum zu erkennen sind. Eine ähnliche Problematik kann sich aber auch bei bereits gemähtem Erntegut ergeben, wenn sich das Tier mit Gras oder Heu bedeckt versteckt, oder auch bei der Bodenbearbeitung, wenn der Maschinenführer unachtsam ist und ein sich in einer Bodenfurche zusammenkauerndes Tier nicht sieht.

Um die Tiere vor Maschinenberührung und entsprechenden Verletzungen zu schützen, umgekehrt aber auch die Maschinen vor Wildschaden zu schützen, werden daher zunehmend Erfassungseinrichtungen an dem jeweiligen Arbeitsgerät oder auch an dem das Arbeitsgerät ziehenden oder schiebenden Schlepper eingesetzt, um Tiere in der Arbeitsbahn der Arbeitsaggregate automatisch zu erfassen und ein Warnsignal abzusetzen bzw. ggf. auch die Arbeitsaggregate zu stoppen. Da unter Gras oder Heu versteckte Tiere auch durch Kameras nicht sichtbar sind, arbeiten die Erfassungseinrichtungen mit speziellen Sensoriken, die mit ihren Sensor-Abtastsignalen Gras und Heu durchdringen und sozusagen durch den Bodenbewuchs hindurchblicken und Tiere erkennen können. Entsprechende Sensoren tasten hierbei den Boden bzw. den zu bearbeitenden Arbeitskorridor ab, wobei mittels Auswerteeinheiten versucht wird, aus bestimmten Signalmustern eine Tiererkennung abzuleiten. Dies ist jedoch in der Praxis schwierig, da die Abtastsignale auf diverse Umgebungseinflüsse reagieren, was es schwierig macht, durch Tiere bedingte Signalausschläge von anderen Signalausschlägen zu unterscheiden. Dies gilt in erhöhtem Maße bei Arbeitsgeräten, die noch ungeschnittenes Erntegut bearbeiten, da von dem noch stehenden Erntegut diverse Signalreflexionen erzeugt und durch zusätzliche, die Bodenkontur widerspiegelnde Signalreflexionen überlagert werden. Gleichermaßen treten solche Probleme jedoch auch auf, wenn sich ein Tier in einem beispielsweise großen, zusammengerechten Schwad versteckt.

Die Schrift DE 102 58 347 B4 beschreibt eine Einrichtung zur Detektion von Vogelgelegen und Tieren im Grünlandbereich, wobei hier mittels Infrarotsensoren in Kombination mit einer Videokamera die Zwischenfurchen zwischen benachbarten Pflanzreihen zeilenweise abgetastet werden und anhand des Signalpegels entschieden wird, ob in der jeweils abgetasteten Zeile ein Vogelgelege bzw. Tier vorhanden ist. Diese Signalpegel-Überwachung geht davon aus, dass bei einem warmen Objekt wie einem Tier oder Vogelgelege der Strahlungspegel ansteigt und daher im Signal des jeweiligen Infrarotsensors ein entsprechender Signalausschlag auftritt.

Diese vorbekannte Tiererkennung ist in ihrer Funktionsweise jedoch auf Reihenpflanzungen wie im Maisanbau und einfache Bodenverhältnisse zwischen den Pflanzenreihen angewiesen bzw. kaum mehr funktionsfähig, wenn komplexere Grünlandflächen wie beispielsweise ungemähte Wiesen von einer Mähmaschine zu bearbeiten sind oder keine statischen Tiergelege mit fester, meist runder Konturierung zu erfassen sind, sondern sich bewegende Tiere variierender Umrisskontur und Größe.

Weitere Vorrichtungen zur Tiererkennung sind aus den Schriften DE 37 30 449 C2, DE 10 2009 039601 A1 oder DE 100 16 688 A1 bekannt.

Aus den Schriften DE 10 2014 201 203 A1, US 2016/0157414 A1 und DE 10 2010 038 661 A1 sind ferner Flugdrohnen bekannt, die eine Sensorik zum Erfassen von Pflanzenwuchs und Tieren auf landwirtschaftlichen Flächen aufweisen. Ferner beschreibt die Schrift DE 10 2005 055 919 B4 eine Vorrichtung zum Erfassen von Tieren auf landwirtschaftlichen Flächen, wobei ein am Schlepper befestigter Sensorbalken neben den Sensoren Beleuchtungselemente aufweist, die den abzusuchenden Boden mit Licht bestrahlen.

Ein Problem ist hierbei auch, dass die Feldbearbeitungsmaschine auf ein Tiererkennungssignal nicht schnell genug reagieren kann, bspw. nicht rasch genug stoppt oder das Arbeitsaggregat nicht schnell genug anheben kann. Es wurden daher bereits spezielle Schnellhubvorrichtungen angedacht, die mit Gasgeneratoren und Sprengkapseln nach Art von Airbags oder speziellen Hochdruckspeichern zum hydraulischen Hochreissen der Arbeitsagregate arbeiten. Hierdurch werden jedoch nicht nur teuere, aufwendige Anbauten nötig, sondern auch die Aufhängungen und Arbeitsagregate stark belastet. Es wäre daher wünschenswert, eine frühere, raschere Tiererkennung zu ermöglichen, um auch mit langsameren Reaktionszeiten zu recht zu kommen.

Hiervon ausgehend liegt der vorliegenden Erfindung die Aufgabe zugrunde, ein verbessertes Verfahren und eine verbesserte Vorrichtung zum Erkennen von Tieren in der Fahrgasse eines landwirtschaftlichen Arbeitsgeräts, sowie ein verbessertes Verfahren zum Steuern des landwirtschaftlichen Arbeitsgeräts mit einer solchen Tiererkennungsvorrichtung zu schaffen, die jeweils Nachteile des Standes der Technik vermeiden und Letzteren in vorteilhafter Weise weiterbilden. Insbesondere soll eine verlässlicherer Tiererkennung, insbesondere Kitz- und Wilderkennung, auch bei komplexeren Boden- und Grünlandverhältnissen wie ungeschnittenem Erntegut mit noch beherrschbaren Datenvolumina erreicht werden, die auch mit begrenzten Reaktionszeiten am Feldbearbeitungsgerät ein Ausweichen bzw. ein Kollisionsvermeidung ermöglicht.

Erfindungsgemäß wird die genannte Aufgabe durch ein Verfahren gemäß Anspruch 1 sowie eine Vorrichtung gemäß Anspruch 6 gelöst. Bevorzugte Ausgestaltungen der Erfindung sind Gegenstand der abhängigen Ansprüche.

Es wird also vorgeschlagen, eine ferngesteuerte, mit zumindest einem Sensor zum Erkennen von Tieren ausgerüstete Flugdrohne zu verwenden, mittels derer die Fahrgassen eines landwirtschaftlichen Arbeitsgeräts in einem zu bearbeitenden Feld durch die an der Flugdrohne angebrachte Sensorik berührungslos abgetastet werden können, bevor das Arbeitsgerät die jeweilige Fahrgasse tatsächlich abfährt. Insbesondere kann mittels einer solchen Flugdrohne eine Fahrgasse ausreichend weit vor dem die Fahrgasse abfahrenden Arbeitsgerät oder auch noch ganz vor Beginn der Feldbearbeitung durch das Arbeitsgerät abgeflogen und auf Tiere oder andere Hindernisse abgesucht werden, so dass am Arbeitsgerät keine übermäßig schnellen Reaktionszeiten und keine Schnellhubvorrichtungen nötig sind, um Kollisionen vermeiden zu können.

Vorteilhafterweise können die von der Sensorik bereitgestellten Sensorsignale an der Flugdrohne selbst ausgewertet und daraufhin analysiert werden, ob ein Tier oder ein anderes Hindernis wie ein Stein erfasst wurde. Hierzu kann die Flugdrohne mit einem intelligenten Analysebaustein zum Auswerten der Sensorsignale ausgerüstet sein, wobei ein solcher Analysebaustein beispielsweise in Form von Software in einem Prozessor bzw. einem Rechnerbaustein implementiert sein kann. Grundsätzlich wäre es aber auch möglich, dass von der Flugdrohne lediglich die Sensorsignale zu einer externen Auswerteeinrichtung, beispielsweise am Schlepper der landwirtschaftlichen Gerätekombination übermittelt und dort ausgewertet werden. Um die zu übertragenden Datenmengen jedoch gering zu halten, kann es vorteilhaft sein, die Sensorsignale direkt an der Flugdrohne auszuwerten.

Vorteilhafterweise werden die ausgewerteten Sensorsignale mit Positionsdaten verknüpft bzw. werden beim Auswerten Positionssignale, die die Position der Drohne repräsentieren, berücksichtigt, um im Falle der Erfassung eines Tiers zu wissen bzw. bestimmen zu können, wo das Tier erfasst wurde. Hierzu kann die Flugdrohne mit einer geeigneten Positionsbestimmungseinrichtung versehen sein, beispielsweise einem GPS-System, das die Position der Flugdrohne absolut bzw. in einem globalen Koordinatensystem bestimmen kann. Anstelle einer solchen global arbeitenden Positionsbestimmungseinrichtung kann jedoch auch eine relativ arbeitende Positionsbestimmungseinrichtung vorgesehen sein, die die Position der Flugdrohne relativ zu dem landwirtschaftlichen Arbeitsgerät bestimmen kann, sodass im Falle der Erfassung eines Tiers dessen Position relativ zu der landwirtschaftlichen Arbeitsmaschine angegeben werden kann. Eine solche relative Positionsbestimmung ist insbesondere vorteilhaft, wenn die Flugdrohne an die landwirtschaftliche Arbeitsmaschine angebunden wird bzw. während der Feldbearbeitung durch die landwirtschaftliche Arbeitsmaschine vor der landwirtschaftlichen Arbeitsmaschine herfliegt, um deren Fahrgasse vorausschauend auf Tiere abzusuchen. Andererseits kann eine globale Positionsbestimmung insbesondere dann vorteilhaft sein, wenn die Flugdrohne das zu bearbeitende Feld unabhängig vom landwirtschaftlichen Arbeitsgerät bzw. dessen Bearbeitung absucht, das heißt bevor die Arbeitsmaschine überhaupt die Feldbearbeitung aufnimmt bzw. am zu bearbeitenden Feld angekommen ist.

Eine solche Tiererfassung vor Beginn der Feldbearbeitung kann ausreichend sein, da Tiere oder Gelege ihre Position im Feld relativ selten wechseln bzw. längerfristig an einem Ort verharren, sodass beispielsweise das Absuchen des Feldes eine Stunde oder eine halbe Stunde vor Feldbearbeitung ausreichend sein kann. Oft sind es schlafende Kitze oder noch im Nest befindlicher Nachwuchs, der sich auch bei lauter Maschinenannäherung nicht entfernt.

Die Position, an der ein Tier erfasst wurde, sei es eine globale Position in einem weltweiten Koordinatensystem oder eine relative Position in einem schlepperfesten Koordinatensystem, kann vorteilhafterweise in einer Speichereinrichtung gespeichert werden, auf die eine Steuerungseinrichtung der landwirtschaftlichen Arbeitsmaschine und/oder ein mobiles Endgerät wie beispielsweise ein Smartphone oder ein Tablet, das der Maschinenführer mit sich führt, Zugriff hat. In Abhängigkeit der gespeicherten Tierpositionen können die genannte Steuereinrichtung und/oder das mobile Endgerät geeignete Maßnahmen ergreifen, beispielsweise automatisch ein Arbeitsaggregat der landwirtschaftlichen Arbeitsmaschine anheben und/oder die Fahrgeschwindigkeit des landwirtschaftlichen Arbeitsgeräts verlangsamen und/oder das Arbeitsgerät stoppen, bevor es zur Kollision kommt. Alternativ oder zusätzlich kann ein Lenksignal bereitgestellt werden, um die erfasste Tierposition zu umfahren, wobei ein solches Lenksignal im Sinn einer halbautomatischen Steuerung dem Fahrer als Lenksignal angezeigt oder im Sinne einer vollautomatischen Steuerung einem Lenkaktor bereitgestellt werden kann.

Die Steuereinrichtung und/oder das mobile Endgerät kann hierbei einerseits mit den gespeicherten Positionsdaten, die die Position eines erfassten Tieres oder Hindernisses angeben, und der aktuellen Position der landwirtschaftlichen Arbeitsmaschine und/oder des mobilen Endgeräts arbeiten, die miteinander abgeglichen werden können, um zu bestimmen, wenn sich das landwirtschaftliche Arbeitsgerät und/oder das mobile Endgerät der Tierposition annähert. Hierzu kann die landwirtschaftliche Arbeitsmaschine und/oder das mobile Endgerät eine Positionsbestimmungseinrichtung beispielsweise in Form eines GPS-Systems umfassen, um die jeweils aktuelle Position bereitzustellen.

In Weiterbildung der Erfindung kann dem Maschinenführer auch ein Bild des zu bearbeitenden Feldes und und evtl. auch von dessen Umgebung bereitgestellt werden, in dem von der Drohnensensorik erfasste Tiere oder Hindernisse eingetragen bzw. markiert sein können, so dass der Maschinenführer geeignete Maßnahmen einleiten kann. Eine solche Felddarstellung kann beispielsweise eine kartografische und/oder satellitenbildähnliche Felddarstellung umfassen, in der Markierungen erkannte Tiere oder Hindernisse anzeigen und lokalisieren. Alternativ oder zusätzlich kann die Darstellung auch die zu befahrenden Fahrgassen anzeigen, wobei Fahrgassenabschnitte, in denen Tiere erkannt wurden markiert sein können, bspw. andersfarbig hervorgehoben sein können.

Die Flugdrohne kann dabei in verschiedener Weise über das abzusuchende Feld gesteuert werden. Soll die Flugdrohne ohne Ankoppelung an die landwirtschaftliche Arbeitsmaschine im Voraus über das Feld fliegen, kann die Flugdrohne in einfacher Weiterbildung der Erfindung per Fernsteuerung manuell von einem Drohnenführer gesteuert werden.

Alternativ oder zusätzlich kann die Flugdrohne auch mit einer automatisch arbeitenden Fernsteuerung über das abzusuchende Feld gesteuert werden, wobei eine solche automatische Fernsteuereinrichtung die Flugdrohne vorteilhafterweise anhand einer Positionsbestimmungseinrichtung, die die aktuelle Position der Flugdrohne angibt, und kartografischen Informationen über das abzusuchende Feld steuert. Beispielsweise können in eine Speichereinrichtung kartografische Felddaten, die die Position und/oder Abmessungen und/oder Lage des Felds definieren, geladen werden, anhand derer dann die automatische Fernsteuereinrichtung die Flugdrohne steuert und über das Feld führt, insbesondere anhand eines vorbestimmten Flugweges über das Feld, beispielsweise in Form mäanderförmiger Flugschenkel.

Alternativ oder zusätzlich zu kartografischen Informationen über das Feld wie beispielsweise GPS-Koordinaten kann die automatische Fernsteuereinrichtung auch weitere Signale oder Informationen für die Lenkung der Flugdrohne berücksichtigen, beispielsweise von der Flugdrohne selbst gewonnene Hindernisdaten. Ist die Flugdrohne beispielsweise mit einer bildgebenden Sensorik beispielsweise in Form einer Kamera oder einer anderen Hinderniserfassungseinrichtung, beispielsweise in Form eines Ultraschallsensors oder dergleichen ausgerüstet und wird beispielsweise ein Hindernis wie ein Wald oder ein Baum erfasst, der im Flugweg der Flugdrohne liegt, kann die Flugdrohne von der automatischen Fernsteuereinrichtung um das Hindernis herumgelenkt werden.

Alternativ oder zusätzlich kann die Flugdrohne aber auch an die landwirtschaftliche Arbeitsmaschine angebunden und in Abhängigkeit der Position und/oder Bewegung der Arbeitsmaschine über das zu bearbeitende Feld geführt werden, insbesondere um unmittelbar über die vor der landwirtschaftlichen Maschine liegende Fahrgasse geflogen zu werden. Hierzu kann die Flugdrohne und/oder die landwirtschaftliche Arbeitsmaschine mit einer automatischen Fernsteuereinrichtung zum Fernsteuern der Flugdrohne in Abhängigkeit der Position und/oder Geschwindigkeit und/oder Fahrtrichtung der landwirtschaftlichen Arbeitsmaschine ausgerüstet sein, wie noch näher erläutert wird.

Insbesondere kann die an die landwirtschaftliche Arbeitsmaschine angebundene Flugdrohne in einem vorbestimmten Fenster vor der landwirtschaftlichen Arbeitsmaschine bzw. über der erst noch zu befahrenden Fahrgasse verflogen werden, wobei das genannte Flugfenster der Flugdrohne, das an die Arbeitsmaschine angebunden ist, je nach Fahrgeschwindigkeit und Fahrtrichtung verschoben werden kann, beispielsweise mit zunehmender, höherer Fahrgeschwindigkeit der landwirtschaftlichen Arbeitsmaschine weiter vor der Arbeitsmaschine liegen kann und/oder größer gemacht werden kann, oder beispielsweise bei Einlenken in eine Rechtskurve weiter nach rechts verschoben werden kann, wie ebenfalls noch erläutert wird.

Das Absuchen des zu bearbeitenden Feldes mittels einer Flugdrohne unabhängig von der landwirtschaftlichen Arbeitsmaschine, das heißt vor Beginn der Feldbearbeitung, und das Absuchen des Feldes mit einer/der Flugdrohne, die an die landwirtschaftliche Arbeitsmaschine in der genannten Weise angebunden ist, kann auch miteinander kombiniert werden, sodass das zu bearbeitende Feld zweifach oder mehrfach abgesucht wird, einmal vor Beginn der Feldbearbeitung und einmal während der bereits laufenden Feldbearbeitung. Hierdurch kann eine nochmals verlässlichere Tiererkennung erreicht werden.

Dabei können verschiedene Typen von Sensoren an der Flugdrohne eingesetzt werden. Vorteilhafterweise kann zumindest ein im sichtbaren Bereich arbeitender optischer Sensor und/oder zumindest ein im Infrarotbereich, insbesondere im Nahinfrarotbereich arbeitender Infrarotsensor vorgesehen sein. Insbesondere kann der Sensor dabei derart ausgebildet sein, dass zumindest ein Wellenlängenbereich im sichtbaren Lichtbereich und/oder zumindest ein Wellenlängenbereich im Nahinfrarotbereich detektierbar und elektronisch auswertbar ist, wobei die elektronische Auswertung im Sensor selbst erfolgen kann, wobei anstelle einer in den Sensor integrierten Auswerteeinheit auch eine separate Auswerteeinheit vorgesehen sein kann.

Vorteilhafterweise kann ein Sensor vorgesehen sein, der sowohl im sichtbaren Bereich als auch im Nahinfrarotbereich arbeiten kann. Alternativ oder zusätzlich können auch mehrere Sensoren vorgesehen sein, von denen zumindest einer im sichtbaren Bereich arbeitet und ein weiterer im Infrarotbereich, insbesondere im Nahinfrarotbereich arbeiten kann.

Vorteilhafterweise ist der zumindest eine Sensor dabei dazu ausgebildet, gepulstes Licht weiter zu verarbeiten, wobei eine Lichtquelle zum Abgeben eines solchen gepulsten Lichts in den Sensor integriert oder hiervon separat vorgesehen ist. Um den Sensor an das gepulste Licht anzupassen bzw. damit zu synchronisieren, ist dem zumindest einen Sensor ein Filter in Form eines Lock-in-Filters zugeordnet, der das gepulste Licht bzw. das vom Boden bzw. einem darauf befindlichen Tier zurückgeworfene Lichtsignal filtert und nicht auf das gepulste Licht zurückgehende Lichtströme zumindest weitgehend herausfiltert und vom Sensor fern hält.

Gemäß einem weiteren Aspekt kann vorgesehen sein, nicht mehr nur eine einfache Pegelüberwachung des Abtastsignals vorzunehmen und bei Signalausschlägen vorbestimmter Größe auf ein Tier oder einen Stein bzw. einen Erdklumpen oder Ähnliches zu schließen, sondern das Abtastsignal hinsichtlich seines Wellenlängenspektrums qualitativ zu analysieren. Vorteilhafterweise ist die Auswerteeinheit derart ausgebildet, dass das Signal des zumindest einen Infrarotsensors in verschiedenen Wellenlängenfenstern ausgewertet und ein Signalverlauf über die Wellenlänge bestimmt wird, wobei dann aus dem Signalverlauf über die Wellenlänge das Vorhandensein eines Tiers bestimmt wird. Dieser Ansatz geht von der Erkenntnis aus, dass ein Tier bei Abtastung durch einen Infrarotsensor eine Antwort bzw. ein Signal erzeugt, das zwar möglicherweise denselben oder einen vergleichbaren Pegel wie das von einem Stein, der Bodenoberfläche oder dem Schnittgut erzeugte Signal aufweist, jedoch eine andere Signalform besitzt, wenn man das Signal über in verschiedenen Wellenlängenbereichen betrachtet, insbesondere bei verschiedenen Wellenlängen des Nahinfrarot- und sichtbaren Infrarotbereichs und/oder Wellenlängen des für das menschliche Auge sichtbaren Bereichs, wobei verschiedene Wellenlängenfenster im Bereich von etwa 400 nm bis 1700 nm ausgewertet werden können und/oder der Sensor eine Bandbreite von etwa 400 nm bis 1700 nm aufweisen kann. Ein von dem zumindest einen Sensor ertastetes Kitz beispielsweise erzeugt eine andere Signalkurve über einem bestimmten Wellenlängenbereich betrachtet als dies beispielsweise ein Stein tut. Es kann daher anhand der Signalkurve bzw. des Signalverlaufs und/oder der Signalwerte in verschiedenen Wellenlängenbereichen und dessen bzw. deren Charakteristika deutlich besser entschieden werden, ob das erfasste Objekt ein Tier ist oder ein anderes Hindernis, als wenn man nur den Signalpegel bzw. die Höhe des Signalausschlags betrachtet.

In Weiterbildung der Erfindung werden hinsichtlich des von dem zumindest einen Sensor bereitgestellten Signals mehrere Wellenlängenfenster ausgewertet, die über einen Wellenlängenbereich von beispielsweise 400 nm bis 1400 nm verteilt angeordnet sein können und/oder diesen Wellenlängenbereich vollständig abdecken können. Beispielsweise können mindestens drei Wellenlängenfenster einschließlich zweier Wellenlängenfenster am Rand und eines Wellenlängenfensters in einem mittleren Abschnitt des interessierenden Wellenlängenbereichs von der Auswerteeinheit analysiert werden, wobei in jedem Wellenlängenfenster die Signalhöhe beispielsweise in Form eines im Fenster vorliegenden Mittelwerts und/oder andere Charakteristika wie Steigung, Krümmung, Maxima, Minima etc. betrachtet werden kann, um auf ein Tier schliessen zu können.

Vorteilhafterweise berücksichtigt die Auswerteeinheit mehrere Charakteristika des Signalverlaufs über die Wellenlänge, um auf das Vorhandensein eines Tiers rückzuschließen. Hierbei kann die Auswerteeinheit die genannten mehreren Charakteristika prinzipiell in unterschiedlicher Weise berücksichtigen, beispielsweise dahingehend, dass ein Tiererkennungssignal dann abgegeben wird, wenn alle der bei einer Tiererkennung üblicherweise zutreffenden Charakteristiken oder eine ausreichende Unteranzahl der mehreren Charakeristika, beispielsweise vier von fünf erfüllt sind. Hierbei können die Charakteristika bzw. Kriterien ggf. auch gewichtet werden, beispielsweise dahingehend, dass eine Tiererkennung angenommen wird, wenn von fünf Kriterien drei wichtige erfüllt und zwei weniger wichtige nicht erfüllt sind.

Alternativ oder zusätzlich zu einem Infrarotsensor kann die Erfassungseinrichtung auch noch weitere Sensoriken umfassen, beispielsweise eine optische Kamera bzw. einen optischen Sensor, um im sichtbaren Bereich die Arbeitsbahn des Arbeitsaggregats abtasten bzw. ein Bild hiervon bereitstellen zu können. Die Auswerteeinheit kann die Auswertung des Infrarotsensor-Signals mit einer Auswertung des optischen Sensorsignals im sichtbaren Bereich verknüpfen, wobei beispielsweise das Sensorsignal des im sichtbaren Bereich arbeitenden Sensors einfach als Signal aus einem weiteren Wellenlängenfenster gewertet werden kann. In vorteilhafter Weiterbildung der Erfindung kann ein optischer Sensor vorgesehen sein, der mindestens ein Optikelement wie beispielsweise eine Linse und/oder einen Reflektor aufweist und/oder mindestens eine Photodiode bzw. einen lichtempfindlichen Halbleiterbaustein umfasst. Die Verwendung einer solchen Photodiode erlaubt eine sehr kompakte, Platz sparende Bauweise und ermöglicht eine hohe Lichtempfindlichkeit mit feiner Signalauswertung.

Alternativ oder zusätzlich zu dem genannten Optikelement kann der Photodiode auch ein Filter zugeordnet sein, wobei der Filter das auf die Photodiode fallende Licht filtern kann und/oder das von der Photodiode bereitgestellte Signal filtern kann. Der genannte Filter kann vorteilhafterweise mit dem photosensitiven Halbleiterbaustein abgestimmt sein, um das auf die Photodiode fallende Licht so zu filtern, dass dieses an die Photosensitivität des Halbleiterbausteins angepasst ist.

Eine vorteilhafte Ausbildung kann beispielsweise aber auch darin bestehen, dass eine Kamera insbesondere in Form einer Video- oder Fernsehkamera an der Flugdrohne montiert wird, mittels derer ein sehr realistisches Bild der abgetasteten Feldbereiche bereitgestellt werden kann, die dem Maschinenführer das Gefühl vermittelt, mit eigenen Augen zu sehen. In dieses Kamerabild kann vorteilhafterweise eine Markierung oder ein Tiersymbol an der Stelle eingeblendet werden, an dem die Drohnensensorik ein Tier erfasst hat.

Alternativ oder zusätzlich kann aber auch vorgesehen sein, dass ein Radarsensor und/oder ein Photomischdetektor und/oder ein Lichtlaufzeitsensor im Sinne eines sog. Time-of-Flight-Detektors an der Flugdrohne vorgesehen ist. Bei einem solchen Lichtlaufzeit- oder PMD-Sensor werden die Messobjekte von Lichtimpulsen angeleuchtet und die Signallaufzeit gemessen. Aufgrund der Laufzeit kann die Entfernung zwischen Kamera und Objekt errechnet werden. Das resultierende Entfernungsbild kann anschließend auf verschiedene Weisen dargestellt werden (z. B. Farben als Distanzen). Zusätzlich zu der Entfernung kann ein Grauwertbild aus der Intensität des reflektierten Lichts berechnet werden.

Vorteilhafterweise können an der Flugdrohne auch mehrere bildgebende Sensoren unterschiedlicher Gattung, insbesondere eine Kamera in Verbindung mit einem Infrarotsensor, zur Erfassung verschiedener Bilder vorgesehen werden. Vorteihafterweise können die Bilder zumindest zweier verschiedener Sensoren von einem Bildbearbeitungs-Modul auch überlagert werden und als gemeinsames Bild angezeigt werden, beispielsweise dergestalt, dass in ein "normales" Kamerabild die wärmeren Partien eines Infrarotbilds, die beispielsweise Tiere darstellen können, eingeblendet werden.

In vorteilhafter Weiterbildung der Erfindung kann die bildgebende Sensorik auch dazu ausgebildet sein, ein dreidimensionales Bild des erfassten Feldbereichs bereitzustellen. Hierzu kann bspw. eine TOF- bzw. Time-of-Flight-Sensorik wie zuvor erläutert eingesetzt sein. Durch 3D-Bildtechnik kann eine plastische Darstellung erzeugt werden, die dem Maschinenführer auch ein Gefühl für die Tiefe des dargestellten Raums gibt.

Um eine einfache Bedienung der Flugdrohne zu ermöglichen, kann in Weiterbildung der Erfindung die Flugdrohne in Abhängigkeit einer Maschinenstellung und/oder Arbeitswerkzeugposition der Feldbearbeitungsmaschine angesteuert werden derart, dass die Flugdrohne Maschinenbewegungen automatisch folgt und eine gewünschte Position relativ zu der Maschine und/oder deren Arbeitswerkzeug auch bei Maschinenbewegungen, insbesondere Arbeitswerkzeugbewegungen zumindest näherungsweise hält bzw. zu halten versucht und nachfährt. Mit "Folgen" ist dabei nicht ein Hinterher- , sondern ein Vorausfliegen gemeint dergestalt, dass bspw. die Flugdrohne eine Kurve oder einen Bogen der Fahrgasse antizipiert, wenn der Maschinenführer einlenkt. Wird die Flugdrohne in Verbindung mit der das zu bearbeitende Feld abfahrenden Feldbearbeitungsmaschine verwendet, kann die Flugdrohne bei aktiviertem, automatischem Folgemodus die angenommene Fahrgasse der Maschine, die die Flugdrohne im Vorlauf der Maschine überfliegt, an die Position und/oder Fahrtrichtung der Maschine anpassen, und/oder ihre Flugbahn an an die Position und/oder Fahrtrichtung der Maschine anpassen.

Wird beispielsweise ein Fenster für die Relativposition der Flugdrohne, in dem die Flugdrohne bspw. schleifen- oder mäanderförmig quer zur Fahrgasse hin- und herfliegt, bspw. etwa 10m bis 20m vor der Feldbearbeitungsmaschine gewünscht und eingestellt, kann die Flugdrohne ihre Flugbahn(en) automatisch weiter nach links verlegen, wenn der Schlepper nach links einlenkt oder die Feldbearbeitungsmaschine nach links fährt, oder ihre Flugbahn(en) automatisch weiter nach rechts verlegen, wenn der Schlepper nach rechts einlenkt oder die Feldbearbeitungsmaschine nach rechts fährt. Alternativ oder zusätzlich kann die Relativposition der Flugdrohne oder das hierfür vorgesehene Fenster, in dem die Flugdrohne verfliegen kann, auch in Abhängigkeit der Fahrgeschwindigkeit gesteuert und verändert werden. Beispielsweise kann das Fenster für die Relativposition der Flugdrohne weiter nach vorne bzw. weiter vor die landwirtschaftliche Arbeitsmaschine gelegt und/oder vergrößert werden, wenn die Fahrgeschwindigkeit der landwirtschaftlichen Arbeitsmaschine zunimmt, und/oder verkleinert bzw. näher an die landwirtschaftliche Arbeitsmaschine herangerückt werden, wenn die Fahrgeschwindigkeit sinkt.

Vorteilhafterweise kann die Flugdrohne jedoch auch autonom ferngesteuert werden derart, dass von der Flugdrohne verschiedene gewünschte Positionen relativ zu der Maschine und/oder deren Arbeitswerkzeug frei angeflogen werden können. Dies kann beispielsweise durch Eingeben einer Wunschposition für die Flugdrohne relativ zum Schlepper bzw. Arbeitsgerät erfolgen, beispielsweise dergestalt, dass in einem Positionssteuerungsmodul, das in der Kranführerkabine oder einem Führerstand oder einem Fernsteuerstand vorgesehen sein kann, eine Position in Bezug auf den Schlepper eingegeben wird, beispielsweise in Form "8m vor dem Schlepper". Alternativ oder zusätzlich kann jedoch die Flugdrohne auch gänzlich frei gegenüber der Maschine und deren Arbeitswerkzeug verflogen werden, beispielsweise mit Hilfe eines Joysticks, um die Flugdrohne so lange zu verfliegen, bis die Drohnenposition dem Maschinenführer zusagt.

Um die Flugdrohne relativ zu der Maschine bzw. dem Arbeitsgerät positionieren und beispielsweise Schlepperbewegungen automatisch nachfahren, d.h. passend vorausfahren zu können, kann die Flugdrohne in einem relativen, maschinen- bzw. schlepperfesten Koordinatensystem positionsgesteuert werden. Hierzu kann eine Positionsbestimmungseinrichtung vorgesehen sein, die die Flugposition der Flugdrohne relativ zu der Maschine kontinuierlich oder zyklisch bestimmt, wobei eine solche Positionsbestimmungseinrichtung beispielsweise eine Signal-Ortungseinrichtung aufweisen kann, die von der Flugdrohne kommende und/oder an die Flugdrohne gesendete Signale orten und/oder hinsichtlich bestimmter Signaleigenschaften auswerten kann, um hieraus die Relativposition der Flugdrohne zur Arbeitsmaschine zu bestimmen.

Eine solche Signal-Ortungseinrichtung kann beispielsweise dergestalt realisiert sein, dass an dem Schlepper bzw. dem Anbaugerät mehrere Sende-Empfangseinheiten angebracht werden, die mit einer Sende-Empfangseinheit an der Flugdrohne kommunizieren, so dass aus den Signallaufzeiten und/oder Signalstärken und/oder Signalrichtungen im Sinne der Verbindungslinien zwischen den verschiedenen Schlepper- bzw. maschinenseitigen Sende-/Empfangseinheiten zu der Sende-/Empfangseinheit der Flugdrohne deren Position relativ zum Schlepper bzw. der Anbaumaschine bestimmt werden kann. Die genannten Sende-/Empfangseinheiten können beispielsweise Transponder oder Nahbereichs-Sende-/Empfangseinheiten sein. Im Falle eines Schleppers können die genannten Sende-/Empfangseinheiten beispielsweise am Führerhaus angebracht sein. Insbesondere können die Signallaufzeiten von der jeweiligen Sende-/Empfangseinheit am Schlepper bzw. der Maschine zu der Flugdrohne und/oder zurück von der Flugdrohne zu der maschinenseitigen Sende-/Empfangseinheit bestimmt und/oder Signalstärken erfasst und/oder die Richtungen, in denen maximale Signalstärken auftreten, bestimmt werden, um aus den Signallaufzeiten und/oder Signalstärken und/oder Signalrichtungen maximaler Signalstärke die Position der Flugdrohne relativ zur Maschine zu bestimmen.

Alternativ oder zusätzlich zu einer solchen relativen Positionsbestimmung in einem maschinenfesten Koordinatensystem können auch die Positionen der Flugdrohne einerseits und der Maschine und/oder deren Arbeitswerkzeug andererseits jeweils in einem absoluten oder globalen Koordinatensystem bestimmt werden, so dass aus den beiden Absolutpositionen wiederum die Relativposition bestimmt werden kann und in der zuvor beschriebenen Weise beispielsweise die Flugdrohne derart angesteuert werden kann, dass die Flugdrohne einem Schlepper bzw. einem Arbeitswerkzeug und dessen Bewegungen automatisch folgt bzw. zu folgen versucht, d.h. die im voraus abzufliegende Fahrgasse entsprechend anpasst.

Die genannte absolute Positionsbestimmung kann beispielsweise mittels eines Ortungssystems, beispielsweise einem GPS-System erfolgen. Beispielsweise kann die Flugdrohne einerseits und der Schlepper andererseits jeweils mit einer GPS-Einheit ausgestattet sein, um einerseits die absolute Raumposition des Schleppers und andererseits die absolute Raumposition der Flugdrohne zu bestimmen.

In vorteilhafter Weiterbildung der Erfindung kann die Positionssteuerung der Flugdrohne auch in Abhängigkeit von Arbeitsbereichsbegrenzungen und/oder geografischen Informationen zum zu bearbeitenden Feld und/oder Hinderniserfassungs-Daten, die an der Flugdrohne selbst gewonnen werden können, gesteuert werden.

Wird die Flugdrohne beispielsweise in dem zuvor beschriebenen automatischen Folgemodus betrieben, in der die Flugdrohne dem Schlepper automatisch folgt (im Sinne von automatisch vorausfliegt), könnte es beispielsweise dazu kommen, dass bei Zufahren des Schleppers auf einen Baum oder einen Wald die Flugdrohne zu weit vorausfliegt, um die Position zum Schlepper zu halten und dessen Fahrgasse im voraus abzuscannen, und dabei in Kollision mit einem Baum kommt, obwohl der Schlepper selbst den Baum noch nicht erreicht. In ähnlicher Weise könnte es zu einem sinnlosen Überfliegen des Nachbarfelds kommen, wenn die Feldbearbeitungsmaschine sich auf das Vorgewende am Feldrand zu bewegt und die Drohne einfach weiter gerade aus fliegt. Um dies zu verhindern, kann die Positionssteuervorrichtung der Flugdrohne Arbeitsbereichsbegrenzungen und/oder geografische Informationen zum zu bearbeitenden Feld und/oder Hinderniserfassungs-Daten berücksichtigen und/oder selbst eine Hinderniserkennung beispielsweise mittels eines Radar- oder Ultraschallsensors aufweisen, um Hindernisse erkennen zu können.

Die automatische Folgesteuerung kann dann übersteuert und der automatische Folgemodus außer Kraft gesetzt werden, wenn eine Arbeitsbereichsbegrenzung und/oder das Vorgewende und/oder ein Hindernis erreicht wird. Vorteilhafterweise kann die Flugdrohne bzw. eine Fernsteuereinrichtung hierfür dann auch automatisch eine Alternativroute berechnen, die der Arbeitsbereichsbegrenzung Rechnung trägt und/oder einem Hindernis ausweicht, wobei die Ausweichroute vorteilhafterweise derart bestimmt wird, dass die voraussichtliche Fahrgasse des Schleppers bzw. des Arbeitsgeräts im Blickfeld der Sensorik der Flugdrohne bleibt. Insbesondere kann die Flugdrohne bei Erreichen des Vorgewendes am Feldrand bei mäanderförmigen Fahrgassen des Schleppers umdrehen und eine Fahrgasse abfliegen, die neben den bereits abgeflogenen Fahrgassen innerhalb des zu bearbeitenden Feldbereichs liegt.

Vorteilhafterweise kann die Flugdrohne steuerungstechnisch an verschiedene Arbeitsmaschinen, beispielsweise verschiedene Schlepper und/oder auch verschiedene Arbeitsmaschinen bzw. Anbaugeräte steuerungstechnisch angebunden werden, je nachdem, welche Arbeitsmaschine gerade die Flugdrohne benötigt. Vorteilhafterweise kann die Flugdrohne hierbei eine Steuerungsschnittstelle besitzen, die eine Ansteuerung von verschiedenen Maschinen her gestattet. Insbesondere kann in dem Flugsteuerungs- und/oder Kamerasteuerungsmodul der Flugdrohne in Abhängigkeit des Ansteuersignals der jeweiligen Arbeitsmaschine eine Vorkonfigurierung erfolgen, beispielsweise unter Auslesen eines Vorkonfigurations-Datensatzes aus einer Konfigurationsbibliothek. Beispielsweise kann die Flugdrohne bei Ansteuerung durch eine Mähmaschine großer Arbeitsbreite dahingehend vorkonfiguriert werden, dass sich die Flugdrohne bzw. deren Sensorik auf das Abtasten einer breiteren Fahrgasse einstellt, bspw. breitere Schleifen- bzw. Mäanderschenkel quer zur Fahrtrichtung der Mähmaschine abfliegt, während bei Vorkonfiguration für beispielsweise ein schmales Frontmähwerk mit kleiner Arbeitsbreite die Flugdrohne für schmälere Schleifen- bzw. Mäanderschenkel vorkonfiguriert wird.

Die Erfindung wird nachfolgend anhand eines bevorzugten Ausführungsbeispiels und zugehöriger Zeichnungen näher erläutert. In den Zeichnungen zeigen:

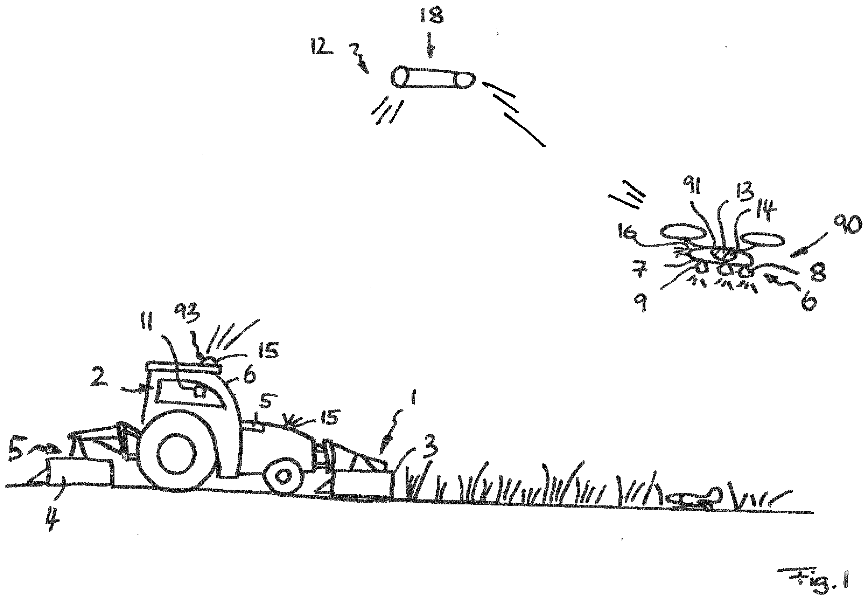

- Fig. 1:: eine schematische Seitenansicht einer landwirtschaftlichen Feldbearbeitungsmaschine in Form einer Schlepper-Anbaugeräte-Kombination mit einem Mähwerk, wobei eine Flugdrohne mit einer tiererfassenden Sensorik dem Schlepperführer eine Darstellung der abzufahrenden Fahrgassen eingebettet in eine kartografische Darstellung des zu bearbeitenden Felds mit etwaiger Markierung der Fahrgassenabschnitte, in denen ein Tier erkannt wird, bereitstellt, und

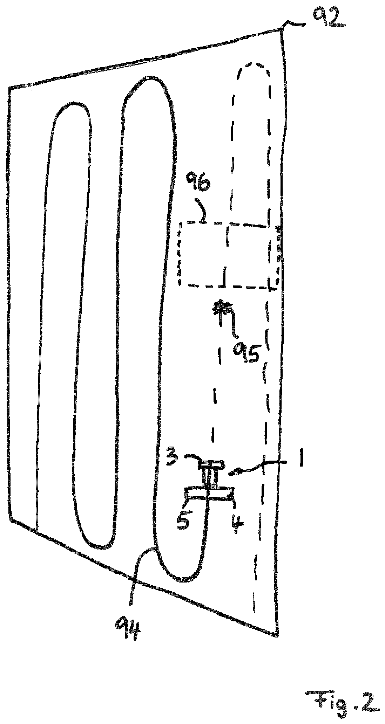

- Fig. 2:: eine schematische Darstellung der von der Flugdrohne angezeigten Tiererkennungsmarkierungen eingebettet in die genannte kartografische Fahrgassendarstellung.

Wie Fig. 1 zeigt, kann das landwirtschaftliche Arbeitsgerät, bei dem die Tiererkennung besonders sinnvoll eingesetzt sein kann, als Mähmaschine 1 ausgebildet sein, die an einen Schlepper 2 anbaubar ausgebildet sein kann, beispielsweise in an sich bekannter Weise durch eine Dreipunktanlenkung umfassend Oberlenker und Unterlenker an den Schlepper 2 angebaut werden kann. Die Mähmaschine 1 kann dabei eine Mähwerkskombination von frontseitig und heckseitig angebauten Mähwerkseinheiten bilden, ggf. aber auch aus nur einer oder nur front- oder heckseitig angebauten Mähwerkseinheiten bestehen.

Die Tiererkennung kann jedoch auch bei anderen landwirtschaftlichen Arbeitsgeräten, insbesondere anderen Grünland- und/oder Erntegeräten verwendet werden.

Um in den Fahrspuren der einzelnen Mähwerkseinheiten 3, 4 und 5 befindliche Tiere wie beispielsweise Rehkitze oder Hasen erfassen zu können, ist erfindungsgemäß eine Flugdrohne 90 vorgesehen, an der eine Erfassungseinrichtung 6 zum Erfassen von Tieren und/oder Hindernissen wie Steinen vorgesehen ist, wobei die genannte Erfassungsvorrichtung 6 einen Sensorbalken oder -träger 7 mit mehreren Sensoren 91 umfassen kann.

Die Erfassungseinrichtung 6 der Flugdrohne 90 kann an dem genannten Sensorträger 7 verteilt mehrere Infrarotsensoren umfassen, die näherungsweise senkrecht auf den Boden gerichtet sein können und vorteilhafterweise einen Erfassungsbereich von +/-45° besitzen können.

Alternativ oder zusätzlich zu den genannten Infrarotsensoren 8, die im Nahinfrarotbereich arbeiten können, kann die Erfassungseinrichtung 6 auch optische Sensoren 9, die im für das menschliche Auge sichtbaren Bereich arbeiten, aufweisen, beispielsweise in Form von Photodioden und/oder im sichtbaren Infrarotbereich und/oder im sichtbaren Lichtspektrum arbeitende Optiksensoren, die ebenfalls an den genannten Sensorbalken 7 angeordnet sein können, ggf. aber auch an anderer Stelle an der Flugdrohne 90 angebracht sein können. Die genannten Optiksensoren können hinsichtlich ihres Abtastbereichs wie zuvor erläutert ausgebildet sein.

Die genannten Infrarot- und/oder Optiksensoren 8 bzw. 9 arbeiten vorteilhafterweise über einen breiteren Wellenlängenbereich von zumindest 800 bis 1300, vorteilhafterweise 400 bis 1400, weiter vorteilhafterweise 400 bis 1700 nm und können beispielsweise als Breitbandsensoren ausgebildet sein. Alternativ oder zusätzlich können dabei mehrere Sensoren in Kombination miteinander Verwendung finden, deren Arbeits-Wellenlängenbereiche sich ergänzen, um den genannten Wellenlängenbereich abzudecken.

Die den Boden im Bereich der abzufahrenden Fahrgassen abtastenden Sensoren können dabei je nach Typus und Charakteristik des im abgetasteten Bereich befindlichen Objekts verschieden ausgebildete Signale liefern.

Vorteilhafterweise können die Sensorsignale auf das Vorhandensein bzw. Erkennen eines Tieres an der Flugdrohne 90 ausgewertet werden, die hierzu eine Auswerteeinrichtung 91 beispielsweise in Form einer elektronischen Rechnereinheit und einer damit zusammenarbeitenden Analysesoftware zur Signalauswertung besitzen kann.

Die genannte Auswerteeinrichtung 91 kann dabei mit einer Positionsbestimmungseinrichtung 18 zusammenarbeiten, um bei Erfassen eines Tieres die Position der Flugdrohne 90 abzufragen bzw. zu bestimmen und mit entsprechenden Positionsdaten zu verknüpfen. Die Flugdrohne 90 kann selbst eine solche Positionsbestimmungseinrichtung umfassen, beispielsweise in Form einer GPS-Einrichtung 14, die die Positionsdaten der Flugdrohne bereitstellt. Alternativ oder zusätzlich können Positionsdaten der Flugdrohne auch von einer externen Positionsbestimmungseinrichtung bereitgestellt werden, beispielsweise vom Schlepper 2 her, wenn dort eine Bestimmung der Relativposition der Flugdrohne 90 erfolgt.

Vorteilhafterweise können die Positionsdaten, die ein erfasstes Tier kennzeichnen, in eine Darstellung des zu bearbeitenden Feldes eingebettet werden, wobei die genannte Darstellung des zu bearbeitenden Feldes beispielsweise aus gespeicherten, kartografischen Felddaten generiert werden kann. Alternativ oder zusätzlich können die genannten Tierpositionsdaten auch in ein aktuelles Bild eingebettet werden, das von der Flugdrohne 90 selbst erfasst wird, beispielsweise wenn die Flugdrohne 90 mit einer Kamera oder einem anderen bildgebenden Sensor versehen ist, um ein Bild des überflogenen Feldes bereitzustellen.

Das von der genannte Drohnensensorik bereitgestellte Erfassungsbild bzw. die Darstellung des zu bearbeitetenden Felds mit darin eingebetteten Tiererkennungs-Positionen ist vorteilhafterweise ein Live- oder Echtzeitbild und wird von der Sensorik der Flugdrohne 90 drahtlos zu einer Anzeigeeinheit 11 und/oder der Steuervorrichtung 5 des Schleppers 2 übertragen, wobei die genannte Anzeigeeinheit 11 beispielsweise ein Maschinenführerdisplay nach Art eines Tablets oder eines Bildschirms oder eines Monitors sein kann, der in der Schlepperführerkabine 6 montiert sein kann. Wird in der zuvor genannten Weise ein Fernsteuerstand verwendet, kann die genannte Anzeigeeinheit an dem Fernsteuerstand oder an der mobilen Bedieneinheit für die Flugdrohne vorgesehen sein.

Alternativ oder zusätzlich zu einer solchen Bildbereitstellung können die eine erkannte Tierposition wiedergebendenen Positionsdaten auch der Steuervorrichtung 5 des Schleppers 2 bereitgestellt werden, um kollisionsvermeidende Maßnahmen automatisch einleiten zu können, beispielsweise ein Lenksignal zum Umfahren des Tiers, ein Aushubsignal zum Ausheben des Arbeitsaggregats oder ein Signal zum automatischen Stoppen der Fahrt der Landmaschine, sodass der Schlepperführer absteigen und das Tier aus der Fahrgasse vertreiben bzw. entfernen kann, wie dies eingangs erläutert wurde.

Die Flugdrohne 90 ist mit einer Fernsteuereinrichtung 12 versehen, die es erlaubt, die Flugdrohne 90 fernzusteuern, insbesondere die Flugsteueraggregate wie beispielsweise Rotorblätter anzusteuern, um die Flugposition der Flugdrohne 90 fernzusteuern.

Ein entsprechendes Fernsteuermodul kann in der Schlepperführerkabine 6 und/oder dem Fernsteuerstand oder der mobilen Bedieneinheit vorgesehen sein, beispielsweise mit entsprechenden Joysticks ausgestattet sein. Um eine einfache Bedienung zu ermöglichen, kann jedoch auch eine Sprachsteuerung und/oder eine Menüsteuerung für die Flugdrohne 90 vorgesehen sein, beispielsweise um aus mehreren vorbestimmten Relativpositionen der Flugdrohne 90 relativ zum Schlepper 2 eine gewünschte Relativposition auszuwählen. Dies kann beispielsweise dadurch erfolgen, dass per Sprachsteuerung und/oder Menüsteuerung "Drohnenposition 1" eingegeben wird, die vorprogrammiert bzw. vorbestimmt in der Positionssteuervorrichtung 13 abgelegt sein kann.

Vorteilhafterweise kann die Position der Flugdrohne 90 relativ zum Schlepper 2 und/oder zur Mähmaschine 1 zumindest weitgehend auch autonom und unabhängig vom Schlepper gesteuert werden, beispielsweise in an sich bekannter Weise über die genannten Joysticks der Fernsteuereinrichtung 12. Über das autonome Steuerungsmodul der Positionssteuervorrichtung 13 kann eine Wunschposition der Flugdrohne 90 relativ zum Schlepper 2 angeflogen werden.

Alternativ oder zusätzlich zu einem solchen autonomen Positionssteuermodul kann die Positionssteuervorrichtung 13 ein automatisches Folgesteuerungsmodul aufweisen, um eine vorbestimmte Position der Flugdrohne 90 - beispielsweise die durch das autonome Positionssteuermodul willkürlich angeflogene Wunschposition und/oder eine vorbestimmte, vorprogrammierte Position - zu halten, auch wenn der Schlepper 2 Schlepperbewegungen ausführt und/oder der Schlepper 2 bewegt wird, so dass die Flugdrohne 90 dem Schlepper 2 weitgehend automatisch folgt und die vorbestimmte Relativposition hierzu hält.

Vorteilhafterweise ist eine Positionsbestimmungseinrichtung 18 vorgesehen, die automatisch kontinuierlich oder zyklisch die Position der Flugdrohne 90 relativ zu dem Schlepper 2 und/oder zur Mähmaschine 1 bestimmt, so dass die Positionssteuervorrichtung 13 in Abhängigkeit der bestimmten Relativposition die Flugdrohne 9 ansteuern kann.

Die Flugdrohne 90 kann hierzu beispielsweise eine GPS-Einheit 14 umfassen, mittels derer die absolute Raumposition der Flugdrohne 9 bestimmt und der Positionssteuervorrichtung 13 übermittelt wird. Andererseits kann die Position des Schleppers 2 bestimmt werden, so dass die Positionssteuervorrichtung 13 die Flugdrohne 9 fernsteuern kann, um die Relativposition zu halten.

Die Schlepperposition kann hierbei grundsätzlich ebenfalls per GPS bestimmt werden, beispielsweise indem in den Schlepper eine GPS-Einheit 93 integriert wird.

Alternativ oder zusätzlich zu einer solchen absoluten Positionsbestimmung kann die Position der Flugdrohne 90 auch relativ in einem schlepperfesten, d.h. sich mit dem Schlepper mitdrehenden Koordinatensystem bestimmt werden. Hierzu können an dem Schlepper 1 Sende-/Empfangseinheiten beispielsweise in Form von Transpondereinheiten 15 vorgesehen sein, die vorteilhafterweise an mehreren, voneinander beabstandeten Stellen am Schlepper 1 angebracht sind. Die genannten Sende-/Empfangseinheiten 15 können mit einer entsprechenden Sende-/Empfangseinheit 16 an der Flugdrohne 9 kommunizieren. Beispielsweise kann dann von einer Ortungseinrichtung 17, die in die Steuervorrichtung 5 des Schleppers 1 integriert sein kann, aus den Signallaufzeiten eines Signals zwischen der Sende-/Empfangseinheit 16 an der Flugdrohne 9 und den jeweiligen Sende-/Empfangseinheiten 15 am Schlepper 1 die Abstände der Flugdrohne 9 von den jeweiligen Sende-/Empfangseinheiten 15 am Schlepper 1 und hieraus die Position der Flugdrohne 9 relativ zum Schlepper 1 bestimmt werden.

Figur 2 zeigt eine kartografische Darstellung des zu bearbeitenden Felds 92, wie es auf der Anzeigeeinheit 11 am Schlepper 2 oder an einem mobilen Endgerät angezeigt werden kann. Darin eingeblendet können die Fahrgassen 94 des Schleppers 2 sein. Eine von der Flugdrohne 90 erfasste Tierposition kann durch ein Tiersymbol 95 in der genannten Darstellung gekennzeichnet werden. Ist die Flugdrohne 90 an das landwirtschaftliche Arbeitsgerät 1 angebunden und in Abhängigkeit von dessen Position und Bewegung gesteuert, kann ein Flugfenster 96, in dem sich die Flugdrohne 90 bewegt, ebenfalls angezeigt werden, vgl. Figur 2.

## Patentansprüche

1. Verfahren zum Steuern einer landwirtschaftlichen Feldbearbeitungsmaschine, bei dem mit einer Erfassungseinrichtung (6), die zumindest einen Sensor (8, 9) umfasst, die Fahrgasse der Feldbearbeitungsmaschine abgetastet und das Signal des Sensors (8, 9) mittels einer Auswerteeinheit (13) auf das Vorhandensein eines Tiers ausgewertet und dessen Position bestimmt wird, wobei der zumindest eine Sensor (8, 9) von einer ferngesteuerten Flugdrohne (90) über die von der landwirtschaftlichen Feldbearbeitungsmaschine zu befahrende Fahrgasse geführt wird und in Abhängigkeit der bestimmten Tierposition von der Steuervorrichtung (5) der landwirtschaftlichen Feldbearbeitungsmaschine eine kollisionsvermeidende Maßnahme automatisch eingeleitet wird, **dadurch gekennzeichnet, dass** mittels zumindest einer pulsierend betreibbaren Beleuchtungsvorrichtung der Abtastbereich des zumindest einen Sensors am Boden beleuchtet wird, wobei die pulsierend betreibbare Beleuchtungsvorrichtung und der zumindest eine Sensor (8, 9) eine miteinander synchronisierte Lock-in-Verstärkereinheit bilden, wobei durch einen dem Sensor (8, 9) zugeordneten Lock-in-Filter Lichtströme, die nicht auf das gepulste Licht der Beleuchtungsvorrichtung zurückgehen, herausgefiltert werden und nur auf das gepulste Licht zurückgehende Lichtströme durchgelassen werden.

2. Verfahren nach dem vorhergehenden Anspruch, wobei die Flugdrohne (90) in Abhängigkeit einer Position und/oder Fahrtrichtung der landwirtschaftlichen Feldbearbeitungsmaschine angesteuert wird derart, dass die Flugdrohne (90) ihre Flugbahn an Bewegungen der landwirtschaftlichen Feldbearbeitungsmaschine automatisch anpasst und der landwirtschaftlichen Feldbearbeitungsmaschine vorauslaufend automatisch folgt und ein gewünschtes Positionsfenster relativ zu der landwirtschaftlichen Feldbearbeitungsmaschine auch bei Maschinenbewegungen der landwirtschaftlichen Feldbearbeitungsmaschine hält, wobei die Position der Flugdrohne (90) relativ zu der landwirtschaftlichen Feldbearbeitungsmaschine kontinuierlich oder zyklisch durch eine Positionsbestimmungseinrichtung (18) automatisch bestimmt wird, wobei die Flugdrohne (90) von einer Positionssteuervorrichtung (13) in Abhängigkeit eines Signals der Positionsbestimmungseinrichtung (18) angesteuert wird derart, dass die Relativposition zwischen dem Flugfenster der Flugdrohne (90) und der landwirtschaftlichen Feldbearbeitungsmaschine zumindest näherungsweise konstant bleibt.

3. Verfahren nach einem der vorhergehenden Ansprüche, wobei die Flugdrohne (90) autonom ferngesteuert wird derart, dass von der Flugdrohne (90) verschiedene gewünschte Positionen relativ zu der landwirtschaftlichen Feldbearbeitungsmaschine angeflogen wird.

4. Verfahren nach einem der vorhergehenden Ansprüche, wobei die Flugdrohne (90) in einem Betriebsmodus unabhängig von der Position der landwirtschaftlichen Feldbearbeitungsmaschine (1) ferngesteuert über das zu bearbeitende Feld (92) verflogen wird, wobei Positionsdaten der Flugdrohnenposition bei Erfassung eines Tieres in einer Speichereinrichtung abgespeichert werden, wobei die abgespeicherten Positionsdaten zu einer erfassten Tierposition von einer Steuervorrichtung (5) der landwirtschaftlichen Arbeitsmaschine (1) verarbeitet und mit aktuellen Positionsdaten, die die aktuelle Position der landwirtschaftlichen Arbeitsmaschine (1) angeben, verglichen werden, wobei in Abhängigkeit des genannten Vergleichs zwischen den gespeicherten Tiererkennungs-Positionsdaten mit den aktuellen Maschinen-Positionsdaten halb- oder vollautomatisch die kollisionsvermeidende Maßnahme ausgelöst wird, nämlich ein Lenksignal zum Umfahren des Tiers und/oder ein Bremssignal zum Abbremsen der landwirtschaftlichen Arbeitsmaschine und/oder ein Hubsignal zum Anheben eines Arbeitsaggregats der landwirtschaftlichen Arbeitsmaschine bereitgestellt wird und/oder die gespeicherten Positionsdaten zu einer Tiererkennung auf einer Anzeigeeinrichtung (11) des landwirtschaftlichen Arbeitsgeräts (1) und/oder eines mobilen Endgeräts eingebettet in eine Darstellung des zu bearbeitenden Felds, insbesondere in Form eines kartografischen Bilds und/oder Satellitenbilds, angezeigt werden.

5. Verfahren nach einem der vorhergehenden Ansprüche, wobei das Signals des zumindest einen Sensors (8, 9) der Flugdrohne (90) von einer Auswerteeinrichtung (91), die an der Flugdrohne (90) vorgesehen ist, auf das Erkennen eines Tiers ausgewertet und mit Positionsdaten, die von einer Positionsbestimmungseinrichtung (18) zum Bestimmen der Flugdrohnenpositionbestimmung bereitgestellt werden, verknüpft werden, wobei von der Flugdrohne (90) die eine Tiererkennung angebenden Positionsdaten an die landwirtschaftliche Arbeitsmaschine (1) und/oder an ein mobiles Endgerät eines Schlepperführers und/oder an eine externe Steuervorrichtung übertragen werden und/oder bereitgestellt werden sowie in einer Speichereinrichtung, die an der Flugdrohne (90) und/oder an einer externen Steuervorrichtung und/oder an der landwirtschaftlichen Arbeitsmaschine (1) und/oder einem mobilen Endgerät eines Schlepperführers vorgesehen ist, abgespeichert werden.

6. Vorrichtung zum Steuern einer landwirtschaftlichen Feldbearbeitungsmaschine, mit einer Erfassungseinrichtung (6) zum Erfassen von Tieren, Hindernissen, Steinen und dgl. auf dem Erdboden, wobei die Erfassungseinrichtung (6) zumindest einen Sensor (8, 9) zum Abtasten der Fahrgasse und eine Auswerteeinheit (13) zum Auswerten des Signals des Sensor (8, 9) zur Tiererkennung und Bestimmen der Position eines erkannten Tieres aufweist, wobei der zumindest eine Sensor (8, 9) an einer ferngesteuerten Flugdrohne (90) montiert ist, die eine Fernsteuerung zum Abfliegen der Fahrgasse aufweist, wobei eine Vergleichseinrichtung zum Vergleichen der eine Tiererkennung angebenden Positionsdaten mit aktuellen Positionsdaten, die die aktuelle Position der landwirtschaftlichen Arbeitsmaschine (1) angeben, vorgesehen ist und eine Steuervorrichtung (5) der landwirtschaftlichen Arbeitsmaschine (1) dazu konfiguriert ist, in Abhängigkeit des genannten Vergleichs zwischen Tiererkennungs-Positionsdaten und aktuellen Maschinen-Positionsdaten eine kollisionsvermeidende Maßnahme einzuleiten **dadurch gekennzeichnet, dass** zumindest eine pulsierend betreibbare Beleuchtungsvorrichtung zum Beleuchten des Abtastbereichs des zumindest einen Sensors am Boden vorgesehen und der zumindest eine Sensor (8, 9) dazu ausgebildet ist, gepulstes Licht und/oder gepulste Infrarotstrahlung zu erfassen, wobei die pulsierend betreibbare Beleuchtungsvorrichtung und der zumindest eine Sensor (8, 9) als miteinander synchronisierte Lock-in-Verstärker-Einheit ausgebildet sind, wobei dem zumindest einen Sensor (8, 9) ein Lock-in-Filter zugeordnet ist, der dazu ausgebildet ist, Lichtströme, die nicht auf das gepulste Licht der Beleuchtungsvorrichtung zurückgehen, herauszufiltern und nur auf das gepulste Licht zurückgehende Lichtströme durchzulassen.

7. Vorrichtung nach dem vorhergehenden Anspruch, wobei eine Positionssteuervorrichtung (13)
- ein automatisches Folgesteuermodul zum Ansteuern der Flugdrohne (90) in Abhängigkeit einer Maschinenstellung und/oder einer Arbeitswerkzeugposition derart, dass die Flugdrohne (90) Maschinen-, insbesondere Arbeitswerkzeugbewegungen automatisch folgt und eine gewünschte Position relativ zur landwirtschaftlichen Feldbearbeitungsmaschine auch bei Maschinenbewegungen der landwirtschaftlichen Feldbearbeitungsmaschine hält und/oder
- autonomes Steuermodul zum autonomen Fernsteuern der Flugdrohne (90) derart, dass von der Flugdrohne (90) verschiedene gewünschte Positionen relativ zur landwirtschaftlichen Feldbearbeitungsmaschine angeflogen wird, aufweist.

8. Vorrichtung nach einem der vorhergehenden Ansprüche 6 bis 7, wobei eine Positionsbestimmungseinrichtung (18) zum Bestimmen der Position der Flugdrohne (90) relativ zu der landwirtschaftlichen Feldbearbeitungsmaschine vorgesehen ist, wobei die Positionssteuervorrichtung (13) dazu ausgebildet ist, die Flugdrohne (90) in Abhängigkeit der automatisch bestimmten Relativposition zu steuern, wobei
- die Flugdrohne (90) vorzugsweise eine GPS-Einheit (14) zur absoluten Positionsbestimmung der Flugdrohne (90) aufweist und die Positionssteuervorrichtung (13) zum Steuern der Position der Flugdrohne (90) relativ zur landwirtschaftlichen Feldbearbeitungsmaschine dazu ausgebildet ist, die Flugdrohne (90) in Abhängigkeit der absoluten Positionsdaten der Flugdrohne (90) und absoluter Positionsdaten der landwirtschaftlichen Feldbearbeitungsmaschine zu steuern, und/oder
- die Positionsbestimmungseinrichtung (18) eine Signal-Ortungsvorrichtung zum Orten eines von der Flugdrohne (90) abgegebenen Signals aufweist, wobei die genannte Signal-Ortungsvorrichtung an der landwirtschaftlichen Feldbearbeitungsmaschine angebrachte, voneinander beabstandete Sende-/Empfangseinheiten (15) zum Kommunizieren mit einer Sende-/Empfangseinheit (16) an der Flugdrohne (90) sowie eine Auswerteeinrichtung zum Auswerten der übertragenen Signale zwischen den maschinenseitigen Sende-/Empfangseinheiten (15) und der drohnenseitigen Sende-/Empfangseinheit (16) hinsichtlich vorbestimmter Signaleigenschaften, insbesondere hinsichtlich Signallaufzeit und/oder Signalstärke, und Bestimmen der Position der Flugdrohne (90) aus den Signaleigenschaften aufweist.

9. Vorrichtung nach einem der vorhergehenden Ansprüche 6 bis 8, wobei die Flugdrohne (90) eine Auswerteeinrichtung (91) zum Auswerten von Sensorsignalen auf das Erkennen eines Tieres hin aufweist, wobei eine Verknüpfungseinrichtung zum Verknüpfen der ausgewerteten Sensorsignale mit Positionsdaten, die die Position der Flugdrohne (90) bei Erkennen eines Tieres angeben, vorgesehen ist, vorzugsweise an der Flugdrohne (90) vorgesehen ist.

10. Vorrichtung nach einem der vorhergehenden Ansprüche 6 bis 9 , wobei der zumindest eine Sensor (8, 9) als Infrarotsensor, insbesondere im Nahinfrarotbereich arbeitender Sensor, und/oder als optischer Sensor, der im für das menschliche Auge sichtbaren Bereich und/oder im sichtbaren Infrarotbereich arbeitet, mit einem Abtastbereich von +/-10° bis +/-65° mit einer nach unten gerichteten Hauptabtastrichtung ausgebildet ist, wobei der Abtastbereich des zumindest einen Sensors (8, 9) einen Bereich von +/-35° bis +/-55°, insbesondere etwa +/-45°, abdeckt und eine Senkrechte auf den Boden und/oder eine Vertikale umfasst, insbesondere etwa mittig einschließt.

11. Vorrichtung nach einem der vorhergehenden Ansprüche 6 bis 10, wobei zumindest eine Beleuchtungsvorrichtung zum ungepulsten Beleuchten des Abtastbereichs des zumindest einen Sensors am Boden vorgesehen ist und eine Differenzmesseinrichtung vorgesehen ist, die dazu eingerichtet ist, aus der Differenz eines Sensorsognals, das bei gepulster oder ungepulster Beleuchtung des Abtastbereichs erzeugt wurde, und eines Sensorsignals, das bei unbeleuchtetem Abtastbereich erzeugt wurde, ein korrigiertes Sensorsignal, in dem die Einflüße des Sonnenlichts eliminiert sind, zu bestimmen.

12. Vorrichtung nach einem der vorhergehenden Ansprüche 6 bis 11, wobei der zumindest eine Sensor (8, 9) ein Breitbandsensor ist und/oder mehrere Sensoren (8, 9), die in verschiedenen Wellenlängenbereichen arbeiten, vorgesehen sind und die Auswerteeinheit (13) derart ausgebildet ist, dass ein Signal des zumindest einen Sensors (8, 9) in verschiedenen Wellenlängenfenstern ausgewertet wird, um das Vorhandensein eines Tiers zu bestimmen, wobei ein Signalverlauf über die Wellenlänge für zumindest einen Teil des Wellenlängenbereichs des zumindest einen Sensors (8, 9) bestimmt und aus dem Signalverlauf über die Wellenlänge das Vorhandensein eines Tiers bestimmt wird, wobei der Signalverlauf über einen Wellenlängenbereich von zumindest 700 nm bis 1200 nm, vorzugsweise 400 nm bis 1400 nm, bestimmt wird und der zumindest eine Sensor (8) eine Bandbreite von zumindest 700 nm bis 1400 nm aufweist und/oder mehrere Infrarotsensoren (8) vorgesehen sind, deren Bandbreiten sich zu einer Gesamtbandbreite von zumindest 700 nm bis 1400 nm ergänzen, so dass ein Infrarotsensorsignal oder mehrere Infrarotsensorsignale über die genannte Bandbreite von zumindest 700 bis 1400 nm, vorzugsweise 400 nm bis 1400nm bereitstellbar ist/sind.

13. Vorrichtung nach einem der vorhergehenden Ansprüche 6 bis 12, wobei an der Flugdrohne (90) mehrere Sensoren unterschiedlicher Bildgattung, insbesondere eine Kamera in Verbindung mit einem Infrarotsensor, zur Erfassung verschiedener Bilder vorgesehen sind, wobei die Bilder zumindest zweier verschiedener Sensoren von einem Bildbearbeitungs-Modul zu einem gemeinsam Bild überlagerbar sind, wobei die Fernsteuereinrichtung (12) eine Positionssteuervorrichtung (13) zum Ansteuern der Flugdrohne (90) in Abhängigkeit einer Maschinenstellung und/oder Arbeitswerkzeugstellung derart, dass die Flugdrohne (90) Maschinenbewegungen der landwirtschaftlichen Feldbearbeitungsmaschine automatisch folgt und eine gewünschte Position relativ zur landwirtschaftlichen Feldbearbeitungsmaschine auch bei Maschinenbewegungen der landwirtschaftlichen Feldbearbeitungsmaschine hält, aufweist, wobei die Fernsteuereinrichtung (12) ein autonomes Steuermodul zum autonomen Steuern der Flugdrohne (90) derart, dass von der Flugdrohne (90) verschiedene gewünschte Positionen relativ zu der landwirtschaftlichen Feldbearbeitungsmaschine angeflogen wird, und/oder ein Begrenzungsmodul zum automatischen Begrenzen des Flugfensters für die Flugdrohne (90) in Abhängigkeit von Arbeitsbereichsbegrenzungsdaten und/oder in Abhängigkeit von Hinderniserkennungsdaten, die von einer Hinderniserkennungseinrichtung an der Flugdrohne (90) generierbar sind, aufweist.

## Claims

1. Method for controlling an agricultural field-cultivating machine, in which, using a detection apparatus (6) which comprises at least one sensor (8, 9), the machine track of the field-cultivating machine is scanned and the signal from the sensor (8, 9) is evaluated by means of an evaluation unit (13) for the presence of an animal and the position thereof is determined, wherein the at least one sensor (8, 9) is guided over the machine track to be travelled by the agricultural field-cultivating machine by a remote-controlled aerial drone (90) and, depending on the determined animal position, a collision-preventing measure is automatically initiated by the control device (5) of the agricultural field-cultivating machine, **characterised in that** the scanning region of the at least one sensor on the ground is illuminated by means of at least one pulsed-operation illumination device, wherein the pulsed-operation illumination device and the at least one sensor (8, 9) form a synchronised lock-in amplifier unit, wherein luminous fluxes which are not attributed to the pulsed light from the illumination device are filtered out by a lock-in filter assigned to the sensor (8, 9) and only luminous fluxes which are attributed to the pulsed light are allowed through.

2. Method according to the preceding claim, wherein the aerial drone (90) is actuated on the basis of a position and/or travel direction of the agricultural field-cultivating machine such that the aerial drone (90) automatically adjusts its flight path to movements of the agricultural field-cultivating machine and the agricultural field-cultivating machine automatically follows the agricultural field-cultivating machine so as to be ahead thereof, and maintains a desired position window relative to the agricultural field-cultivating machine even in the event of machine movements of the agricultural field-cultivating machine, wherein the position of the aerial drone (90) relative to the agricultural field-cultivating machine is automatically determined continuously or cyclically by a position-determining apparatus (18), wherein the aerial drone (90) is actuated by a position-control device (13) on the basis of a signal from the position-determining apparatus (18) such that the relative position between the flight window of the aerial drone (90) and the agricultural field-cultivating machine remains at least approximately constant.

3. Method according to any of the preceding claims, wherein the aerial drone (90) is autonomously remotely controlled such that the aerial drone (90) flies over various desired positions relative to the agricultural field-cultivating machine.

4. Method according to any of the preceding claims, wherein, in an operating mode, the aerial drone (90) flies over the field (92) to be cultivated in a remote-controlled manner independently of the position of the agricultural field-cultivating machine (1), wherein position data for the aerial-drone position are stored in a storage apparatus when an animal is detected, wherein the stored position data are processed by a control device (5) of the agricultural machine (1) to form a detected animal position and are compared with current position data which specify the current position of the agricultural machine (1), wherein, on the basis of said comparison between the stored animal-identification position data and the current machine position data, the collision-preventing measure is triggered semi-automatically or fully automatically, namely a steering signal for driving around the animal and/or a braking signal for braking the agricultural machine and/or a raising signal for raising a working unit of the agricultural machine is provided and/or the stored position data for an animal identification is displayed on a display apparatus (11) of the agricultural working equipment (1) and/or of a mobile terminal so as to be embedded in a display of the field to be cultivated, in particular in the form of a cartographic image and/or satellite image.

5. Method according to any of the preceding claims, wherein the signals from the at least one sensor (8, 9) of the aerial drone (90) are evaluated for the identification of an animal by an evaluation apparatus (91) provided on the aerial drone (90) and are linked with position data which are provided by a position-determining apparatus (18) for determining the position of the aerial drone, wherein the position data indicating the identification of an animal are transmitted and/or provided from the aerial drone (90) to the agricultural machine (1) and/or to a mobile terminal of a tractor driver and/or to an external control device, and are stored in a storage apparatus which is provided on the aerial drone (90) and/or on an external control device and/or on the agricultural machine (1) and/or a mobile terminal of a tractor driver.

6. Device for controlling an agricultural field-cultivating machine, comprising a detection apparatus (6) for detecting animals, obstacles, stones and the like on the ground, wherein the detection apparatus (6) comprises at least one sensor (8, 9) for scanning the machine track and an evaluation unit (13) for evaluating the signal from the sensor (8, 9) for identifying animals and determining the position of an identified animal, wherein the at least one sensor (8, 9) is mounted on a remote-controlled aerial drone (90) which comprises a remote control for flying over the machine track, wherein a comparison apparatus is provided for comparing the position data indicating the identification of an animal with current position data which indicate the current position of the agricultural machine (1), and a control device (5) of the agricultural machine (1) is configured to initiate a collision-preventing measure on the basis of said comparison between the animal-identification position data and the current machine position data, **characterised in that** at least one pulsed-operation illumination device is provided for illuminating the scanning region of the at least one sensor on the ground, and the at least one sensor (8, 9) is designed to detect pulsed light and/or pulsed infrared radiation, wherein the pulsed-operation illumination device and the at least one sensor (8, 9) is designed as a synchronised lock-in amplifier unit, wherein a lock-in filter is assigned to the at least one sensor (8, 9) which is designed to filter out luminous fluxes which are not attributed to the pulsed light from the illumination device and to only allow through luminous fluxes which are attributed to the pulsed light.

7. Device according to the preceding claim, wherein a position-control device (13) comprises
- an automatic following control module for actuating the aerial drone (90) on the basis of a machine position and/or a tool position such that the aerial drone (90) automatically follows machine movements, in particular tool movements, and maintains a desired position relative to the agricultural field-cultivating machine even during machine movements of the agricultural field-cultivating machine and/or
- an autonomous control module for the autonomous remote control of the aerial drone (90) such that the aerial drone (90) flies over various desired positions relative to the agricultural field-cultivating machine.

8. Device according to any of the preceding claims 6 to 7, wherein a position-determining apparatus (18) is provided for determining the position of the aerial drone (90) relative to the agricultural field-cultivating machine, wherein the position-control device (13) is designed to control the aerial drone (90) on the basis of the automatically determined relative position, wherein
- the aerial drone (90) preferably comprises a GPS unit (14) for the absolute position determination of the aerial drone (90) and the position-control device (13) is designed to control the position of the aerial drone (90) relative to the agricultural field-cultivating machine so as to control the aerial drone (90) on the basis of the absolute position data from the aerial drone (90) and absolute position data from the agricultural field-cultivating machine, and/or
- the position-determining apparatus (18) comprises a signal geolocation device for geolocating a signal output by the aerial drone (90), wherein said signal geolocation device comprises transceiver units (15) that are attached to the agricultural field-cultivating machine and are spaced apart from one another for communicating with a transceiver unit (16) on the aerial drone (90) and an evaluation unit for evaluating the signals transmitted between the machine-side transceiver units (15) and the drone-side transceiver unit (16) with regard to predetermined signal properties, in particular with regard to signal propagation time and/or signal strength, and determining the position of the aerial drone (90) from the signal properties.

9. Device according to any of the preceding claims 6 to 8, wherein the aerial drone (90) comprises an evaluation apparatus (91) for evaluating sensor signals for the identification of an animal, wherein a linking apparatus is provided, and is preferably provided on the aerial drone (90), for linking the evaluated sensor signals with position data that indicate the position of the aerial drone (90) when an animal is identified.

10. Device according to any of the preceding claims 6 to 9, wherein the at least one sensor (8, 9) is designed as an infrared sensor, in particular a sensor operating in the near infrared range, and/or as an optical sensor which operates in the range visible to the human eye and/or in the visible infrared range, having a scanning region of +/-10° to +/-65° with a downwardly directed main scanning direction, wherein the scanning region of the at least one sensor (8, 9) covers a region of +/-35° to +/-55°, in particular approximately +/-45°, and comprises, in particular approximately centrally encloses, a perpendicular line to the ground and/or a vertical.

11. Device according to any of the preceding claims 6 to 10, wherein at least one illumination device for the non-pulsed illumination of the scanning region of the at least one sensor is provided on the ground and a difference-measuring apparatus is provided that is configured to determine a corrected sensor signal from which the influences of the sunlight are eliminated from the difference between a sensor signal that has been generated with pulsed or non-pulsed illumination of the scanning region and a sensor signal that has been generated with an unilluminated scanning region.

12. Device according to any of the preceding claims 6 to 11, wherein the at least one sensor (8, 9) is a wide-band sensor and/or a plurality of sensors (8, 9) that operate in different wavelength ranges are provided, and the evaluation unit (13) is designed such that a signal from the at least one sensor (8, 9) is evaluated in different wavelength windows in order to determine the presence of an animal, wherein a signal curve over the wavelength is determined for at least part of the wavelength range of the at least one sensor (8, 9) and the presence of an animal is determined from the signal curve over the wavelength, wherein the signal curve is determined over a wavelength range of at least 700 nm to 1200 nm, preferably 400 nm to 1400 nm, and the at least one sensor (8) has a bandwidth of at least 700 nm to 1400 nm and/or a plurality of infrared sensors (8) are provided of which the bandwidths complement one another to form a total bandwidth of at least 700 nm to 1400 nm, such that an infrared-sensor signal or a plurality of infrared-sensor signals can be provided over said bandwidth of at least 700 to 1400 nm, preferably 400 nm to 1400 nm.

13. Device according to any of the preceding claims 6 to 12, wherein a plurality of sensors having different image types, in particular a camera connected to an infrared sensor, are provided on the aerial drone (90) for capturing various images, wherein the images at least from two different sensors can be overlaid by an image-processing module to form a common image, wherein the remote-control apparatus (12) comprises a position-control device (13) for actuating the aerial drone (90) on the basis of a machine position and/or a tool position such that the aerial drone (90) automatically follows machine movements of the agricultural field-cultivating machine and maintains a desired position relative to the agricultural field-cultivating machine even during machine movements of the agricultural field-cultivating machine, wherein the remote-control apparatus (12) comprises an autonomous control module for autonomously controlling the aerial drone (90) such that the aerial drone (90) flies in various desired positions relative to the agricultural field-cultivating machine, and/or comprises a limiting module for automatically limiting the flight window for the aerial drone (90) on the basis of working-region limiting data and/or on the basis of obstacle-identification data that can be generated by an obstacle-identification apparatus on the aerial drone (90).

## Revendications

1. Procédé servant à commander une machine de traitement de champ agricole, où la voie de roulement de la machine de traitement de champ est balayée avec un système de détection (6), qui comprend au moins un capteur (8, 9) et le signal du capteur (8, 9) est évalué au moyen d'une unité d'évaluation (13) quant à la présence d'un animal et dont la position est définie, dans lequel l'au moins un capteur (8, 9) est guidé par un drone aérien (90) commandé à distance sur la voie de roulement devant être empruntée par la machine de traitement de champ agricole et une mesure visant à éviter une collision est automatiquement initiée en fonction de la position d'animal définie par le dispositif de commande (5) de la machine de traitement de champ agricole, **caractérisé en ce que** la zone de balayage de l'au moins un capteur est éclairée au niveau du fond au moyen d'au moins un dispositif d'éclairage pouvant fonctionner par impulsions, dans lequel le dispositif d'éclairage pouvant fonctionner par impulsions et l'au moins un capteur (8, 9) forment une unité d'amplification à verrouillage synchronisée, dans lequel des flux de lumière, qui ne reviennent pas sur la lumière pulsée du dispositif d'éclairage, sont filtrés par un filtre à verrouillage associé au capteur (8, 9) et seulement les flux de lumière revenant sur la lumière impulsée sont transmis.

2. Procédé selon la revendication précédente, dans lequel le drone aérien (90) est piloté en fonction d'une position et/ou d'une direction de déplacement de la machine de traitement de champ agricole de telle manière que le drone aérien (90) adapte automatiquement sa trajectoire de vol aux déplacements de la machine de traitement de champ agricole et suit automatiquement en avance la machine de traitement de champ agricole et maintient une fenêtre de position souhaitée par rapport à la machine de traitement de champ agricole également lors de déplacements de machine de la machine de traitement de champ agricole, dans lequel la position du drone aérien (90) par rapport à la machine de traitement de champ agricole est définie automatiquement en continu ou de manière cyclique par un système de définition de position (18), dans lequel le drone aérien (90) est piloté par un dispositif de commande de position (13) en fonction d'un signal du système de définition de position (18) de telle manière que la position relative reste au moins approximativement constante entre la fenêtre de bol du drone aérien (90) et la machine de traitement de champ agricole.

3. Procédé selon l'une quelconque des revendications précédentes, dans lequel le drone aérien (90) est commandé à distance de manière autonome de telle manière que différentes positions souhaitées par rapport à la machine de traitement de champ agricole sont approchées par le drone aérien (90).

4. Procédé selon l'une quelconque des revendications précédentes, où le drone aérien (90) s'envole au-dessus du champ (92) à traiter de manière commandée à distance dans un mode de fonctionnement en fonction de la position de la machine de traitement de champ (1) agricole, dans lequel des données de position de la position de drone aérien sont sauvegardées lors de la détection d'un animal dans un système de mémoire, dans lequel les données de position sauvegardées par rapport à une position d'animal détectée sont traitées par un dispositif de commande (5) de la machine de travail (1) agricole et sont comparées à des données de position instantanées, qui indiquent la position instantanée de la machine de travail (1) agricole, dans lequel la mesure visant à éviter toute collision est déclenchée de manière semi-automatique ou de manière totalement automatique en fonction de ladite comparaison entre les données de position d'identification d'animal stockées et les données de position de machine instantanées, à savoir un signal de déviation servant à contourner l'animal et/ou un signal de freinage servant à ralentir la machine de travail agricole et/ou un signal de levage servant à relever un groupe de travail de la machine de travail agricole sont fournis, et/ou les données de position stockées servant à une identification d'animal sont affichées sur un système d'affichage (11) de l'appareil de travail (1) agricole et/ou d'un terminal mobile, de manière intégrée dans une représentation du champ à traiter, en particulier sous la forme d'une image cartographique et/ou d'une image satellite.

5. Procédé selon l'une quelconque des revendications précédentes, dans lequel le signal de l'au moins un capteur (8, 9) du drone aérien (90) est évalué par un système d'évaluation (91), qui est prévu au niveau du drone aérien (90), quant à l'identification d'un animal et est combiné à des données de position, qui sont fournies par un système de définition de position (18) servant à définir la définition de position de drone aérien, dans lequel les données de position indiquant une identification d'animal sont transmises et/ou fournies à la machine de travail (1) agricole et/ou à un terminal mobile d'un conducteur de tracteur et/ou à un dispositif de commande externe par le drone aérien (90) et sont sauvegardées dans un système de stockage, qui est prévu au niveau du drone aérien (90) et/ou au niveau d'un dispositif de commande externe et/ou au niveau de la machine de travail (1) agricole et/ou d'un terminal mobile d'un conducteur de tracteur.

6. Dispositif servant à commander une machine de traitement de champ agricole, avec un système de détection (6) servant à détecter des animaux, des obstacles, des pierres et similaires sur le sol, dans lequel le système de détection (6) présente au moins un capteur (8, 9) servant à balayer la voie de roulement et une unité d'évaluation (13) servant à évaluer le signal du capteur (8, 9) aux fins de l'identification d'animal et à définir la position d'un animal identifié, dans lequel l'au moins un capteur (8, 9) est monté au niveau d'un drone aérien (90) commandé à distance, qui présente une commande à distance servant à quitter la voie de roulement, dans lequel un système de comparaison est prévu pour comparer les données de position indiquant une identification d'animal à des données de position instantanées, qui indiquent la position instantanée de la machine de travail (1) agricole, et un dispositif de commande (5) de la machine de travail (1) agricole est configurée pour initier une mesure visant à éviter une collision en fonction de ladite comparaison entre des données de position d'identification d'animal et des données de position de machine instantanées, **caractérisé en ce qu'**au moins un dispositif d'éclairage pouvant fonctionner par impulsions est prévu pour éclairer la zone de balayage de l'au moins un capteur sur le sol et l'au moins un capteur (8, 9) est réalisé pour détecter de la lumière pulsée et/ou un rayonnement infrarouge pulsé, dans lequel le dispositif d'éclairage pouvant fonctionner par impulsions et l'au moins un capteur (8, 9) sont réalisés en tant qu'une unité à amplificateur à verrouillage synchronisée, dans lequel est associé à l'au moins un capteur (8, 9) un filtre à verrouillage, qui est réalisé pour filtre des flux de lumière, qui ne reviennent pas sur la lumière pulsée du dispositif d'éclairage et pour transmettre seulement des flux de lumière revenant sur la lumière puisée.

7. Dispositif selon la revendication précédente, dans lequel un dispositif de commande de position (13) présente
- un module de commande de suivi automatique servant à piloter le drone aérien (90) en fonction d'une position de machine et/ou d'une position d'outil de travail de telle manière que le drone aérien (90) suit automatiquement des mouvements de machine en particulier d'outil de travail et maintient une position souhaitée par rapport à la machine de traitement de champ agricole également en cas de mouvements de machine de la machine de traitement de champ agricole, et/ou
- un module de commande autonome servant à commander à distance de manière autonome le drone aérien (90) de telle manière que différentes positions souhaitées par rapport à la machine de traitement de champ agricole sont approchées par le drone aérien (90).

8. Dispositif selon l'une quelconque des revendications précédentes 6 à 7, dans lequel un système de définition de position (18) est prévu pour définir la position du drone aérien (90) par rapport à la machine de traitement de champ agricole, dans lequel le dispositif de commande de position (13) est réalisé pour commander le drone aérien (90) en fonction de la position relative automatiquement définie, dans lequel
- le drone aérien (90) présente de préférence une unité GPS (14) servant à la définition de position absolue du drone aérien (90) et le dispositif de commande position (13) pour commander la position du drone aérien (90) par rapport à la machine de traitement de champ agricole est réalisé pour commander le drone aérien (90) en fonction des données de position absolues du drone aérien (90) et des données de position absolues de la machine de traitement de champ agricole, et/ou
- le système de définition de position (18) présente un dispositif de localisation de signal servant à localiser un signal émis par le drone aérien (90), dans lequel ledit dispositif de localisation de signal présente des unités d'envoi/de réception (15) tenues à distance les unes es autres, installées au niveau de la machine de traitement de champ agricole, servant à communiquer avec une unité d'envoi/de réception (16) au niveau du drone aérien (90) ainsi qu'un système d'évaluation servant à évaluer les signaux transmis entre les unités d'envoi/de réception (15) du côté de la machine et l'unité d'envoi/de réception (16) du côté du drone en termes de propriétés de signaux prédéfinies, en particulier de temps de propagation de signal et/ou d'intensité de signal, et à définir la position du drone aérien (90) à partir des propriétés de signaux.

9. Dispositif selon l'une quelconque des revendications précédentes 6 à 8, dans lequel le drone aérien (90) présente un système d'évaluation (91) servant à évaluer des signaux de capteur quant à l'identification d'un animal, dans lequel un système de combinaison est prévu pour combiner les signaux de capteur évalués à des données de position, qui indiquent la position du drone aérien (90) lors de l'identification d'un animal, de préférence est prévu au niveau du drone aérien (90).

10. Dispositif selon l'une quelconque des revendications précédentes 6 à 9, dans lequel l'au moins un capteur (8, 9) fonctionne en tant que capteur infrarouge, en particulier dans l'infrarouge proche, avec une plage de balayage +/- 10° à +/-65° avec une direction de balayage principale dirigée vers le bas, dans lequel la plage de balayage de l'au moins un capteur (8, 9) couvre une zone de +/- 35° à +/-55°, en particulier d'environ +/-45° et comprend, en particulier forme à peu près au centre, une perpendiculaire sur le sol et/ou une verticale.

11. Dispositif selon l'une quelconque des revendications précédentes 6 à 10, dans lequel au moins un dispositif d'éclairage est prévu pour éclairer de manière non-pulsée la zone de balayage de l'au moins un capteur au niveau du sol et un système de mesure de différence est prévu, qui est mis au point pour définir, à partir de la différence d'un signal de capteur, qui a été généré lors de l'éclairage pulsé ou non-pulsé de la zone de balayage, et d'un signal de capteur, qui a été généré pour une zone de balayage non éclairée, un signal de capteur corrigé, dans lequel les influences de la lumière solaire sont éliminées.

12. Dispositif selon l'une quelconque des revendications précédentes 6 à 11, dans lequel l'au moins un capteur (8, 9) est un capteur à large bande et/ou plusieurs capteurs (8, 9), qui fonctionnent dans des plages de longueurs d'onde différentes, sont prévus et l'unité d'évaluation (13) est réalisée de telle manière qu'un signal de l'au moins un capteur (8, 9) est évalué dans des fenêtres de longueurs d'onde différentes pour définir la présence d'un animal, dans lequel une évolution de signal est définie sur la longueur d'onde pour au moins une partie de la plage de longueurs d'onde de l'au moins un capteur (8, 9) et la présence d'un animal est définie à partir de l'évolution de signal sur la longueur d'onde, dans lequel l'évolution de signal est définie sur une plage de longueurs d'onde d'au moins 700 nm à 1200 nm, de préférence de 400 nm à 1400 nm, et l'au moins un capteur (8) présente une largeur de bande d'au moins 700 nm à 1400 nm et/ou plusieurs capteurs infrarouges (8) sont prévus, dont les largeurs de bande se complètent en une largeur de bande globale d'au moins 700nm à 1400 nm de sorte qu'un signal de capteur infrarouge ou plusieurs signaux de capteur infrarouge peut/peuvent être fournis sur ladite largeur de bande d'au moins 700 à 1400 nm, de préférence de 400 nm à 1400 nm.

13. Dispositif selon l'une quelconque des revendications précédentes 6 à 12, dans lequel plusieurs capteurs de genre différent, en particulier une caméra en lien avec un capteur infrarouge, sont prévus pour détecter des images différentes au niveau du drone aérien (90), dans lequel les images d'au moins deux capteurs différents peuvent être superposées par un module de traitement d'image en une image commune, dans lequel le système de commande à distance (12) présente un dispositif de commande position (13) servant à piloter le drone aérien (90) en fonction d'une position de machine et/ou d'une position d'outil de travail de telle manière que le drone aérien (90) suit automatiquement des mouvements de machine de la machine de traitement de champ agricole et maintient une position souhaitée par rapport à la machine de traitement de champ agricole également en cas de mouvements de machine de la machine de traitement de champ agricole, dans lequel le système de commande à distance (12) présente un module de commande autonome servant à commander de manière autonome le drone aérien (90) de telle manière que différentes positions souhaitées par rapport à la machine de traitement de champ agricole sont approchées par le drone aérien (90), et/ou un module de délimitation servant à délimiter automatiquement la fenêtre de vol pour le drone aérien (90) en fonction de données de délimitation de zone de travail et/ou en fonction de données d'identification d'obstacles, qui peuvent être générées par un système d'identification d'obstacle au niveau du drone aérien (90).
